# EUROPÄISCHE PATENTSCHRIFT

(11) **EP 0 558 888 B1**
(45) Veröffentlichungstag und Bekanntmachung des Hinweises auf die Patenterteilung: **11.09.1996**
(21) Anmeldenummer: 93100242.2
(22) Anmeldetag: 09.01.1993
(51) Int. Cl.: F04C 13/00, F04C 2/08, F04C 15/00

(54) **Einrichtung zur Verarbeitung von hochviskosem Kautschuk oder thermoplastischem Kunststoff**
Device for the treatment of highly viscous rubber or thermoplastic synthetic material
Dispositif pour le traitement de caoutchouc ou de matière synthétique thermoplastique hautement visqueux

(30) Priorität: 06.03.1992 DE 4207088
(43) Veröffentlichungstag der Anmeldung: 08.09.1993
(73) Patentinhaber: HERMANN BERSTORFF Maschinenbau GmbH, D-30627 Hannover (Kleefeld) (DE)
(72) Erfinder: Capelle, Gerd, Dipl.-Ing., W-3012 Langenhagen 6 (DE)

(56) Entgegenhaltungen:
- DE-A- 4 125 128
- DE-U- 8 814 087
- GB-A- 148 792
- GB-A- 820 348

## Beschreibung

Die Erfindung betrifft eine Einrichtung zum Erzeugen eines steuerbaren gleichmäßigen Förderdruckes für die Verarbeitung von hochviskosem Kautschuk oder thermoplastischem Kunststoff gemäß dem Oberbegriff von Anspruch 1.

Aus der DE-PS 36 15 830 ist eine gattungsgemäße Einrichtung bekannt. Wenn hochviskose Materialien, wie bestimmte Kautschuksorten, mit einer derartigen Einrichtung verarbeitet werden sollen, entstehen erhebliche radiale Abdichtungsprobleme hinsichtlich der Stirnseiten der Zahnräder, die dazu geführt haben, daß die Verarbeitung derartiger temperaturempfindlicher Werkstoffe mit zahnradpumpenähnlichen Einrichtungen bisher nicht erfolgte.

Eine axiale Abdichtung der die Zahnräder aufnehmenden Wellen durch wendelförmige Rückfördergewinde ist möglich, läßt jedoch bei hohen Drücken zu wünschen übrig. Das Rückfördergewinde ist eine in die Welle eingebrachte wendelförmige Schraubennut, die in Verbindung mit dem Innenmantel des die Welle aufnehmenden Gehäuses eine stillstehende und eine rotierende Fläche bildet. Die rotierende Fläche wird durch die Welle selbst sowie durch die in der Welle eingebrachte Schraubennut gebildet. Wenn platifiziertes Material in die Schraubennut eindringt, erfolgt durch ein Abrollen des Materials an dem stationären Innenmantel und der sich drehenden Welle ein Fördervorgang. Die Förderrichtung wird durch die Wahl des Steigungswinkels des Rückfördergewindes bestimmt. Sofern temperaturempfindlicher Kautschuk gefördert werden soll, muß sichergestellt sein, daß sich nirgends in der Einrichtung tote Ecken oder Räume ausbilden, weil dort ein partielles Anvulkanisieren des Kautschuks stattfinden würde, wodurch die Mischung verunreinigt und somit unbrauchbar wäre.

Aus der DE-U 88 14 087 ist eine Zahnradpumpe bekannt geworden, bei der die Leckverluste gering gehalten werden sollen, indem die die Wellenzapfen der Zahnräder aufnehmenden Bohrungen in den seitlich anliegenden Dichtplatteen außermittig zur Niederdruckseite versetzt angeordnet sind. Dadurch soll auf der Hochdruckseite trotz eines kleinen Fußkreisdurchmessers ein genügend großer Dichtbereich verbleiben. Zusätzlich soll die Leckölabführung durch die außermittige Anordnung der Bohrungen verbessert werden. Im übrigen wurde das Problem der Durchbiegung der Wellenteile sowie teilweise der seitlichen Abdichtung der Zahnräder gelöst. Der Fußkreisdurchmesser der das zahnartige Dichtprofil bildenden Förderorgane entspricht hier bereits etwa dem Durchmesser der axial beidseitig an den Förderorganen angrenzenden, die Führung der Förderorgane übernehmenden Wellenteile.

Durch die GB-A 820 348 ist außerdem bereits eine Dichtungsanordnung für die Durchführung einer Welle durch ein Gehäuseteil zwischen zwei Räumen mit unterscchiedlichen gasförmigen Medien bekannt geworden. Es ist hier eine Labyrinthdichtung beschrieben, die zwei gegenläufig zueinander angeordnete wendelförmig ausgebildete Rückführungskanäle aufweist, die in eine gemeinsame zentrale, ringförmig ausgebildete Kammer einmünden, in der zum Zweck der Abdichtung ein hohes Vakuum erzeugt wird. Das Kanalvolumen der Rückführungskanäle reduziert sich im übrigen in Förderrichtung kontinuierlich bis auf Null. Eine derartige Labyrinthdichtung ist jedoch für z.B. plastifizierten Kautschuk nicht einsetzbar, da unvermeidbar Material in den Rückführungskanälen bzw. in der zentralen Kammer verbleiben würde, was aus den genannten Gründen unbedingt zu vermeiden ist.

Es ist die Aufgabe der Erfindung, eine Einrichtung zum Erzeugen eines steuerbaren gleichmäßigen Förderdruckes für die Verarbeitung hochviskoser temperaturempfindlicher Materialien, wie z.B. hochviskose Kautschukmikschungen aber auch hochviskose thermoplastische Kunststoffe, zu schaffen, bei der keine axialen Abdichtungsprobleme an den Wellen der Förderorgane entstehen. Es ist insbesondere die Aufgabe der Erfindung, ein Rückfördergewinde hinsichtlich seiner Förderwirksamkeit und Abdichtfunktion erheblich zu verbessern.

Die Aufgabe wird bei einer gattungsgemäßen Einrichtung gelöst durch die Merkmale des ersten Patentanspruchs.

Das Abdichtungsproblem bei einer Einrichtung gemäß dem Hauptanspruch wird erheblich verbessert durch die erfindungsgemäße Ausbildung der Materialrückführungskanäle, die in den Wellenenden der Förderorgane eingebracht sein können. Durch die Volumensverringerung der, entweder in der Welle oder in dem die Welle umgebenden Gehäuse, eingebrachten wendelförmigen Rückführungskanäle entgegen der Förderrichtung auf einen minimalen Wert, erfolgt eine fast vollständige Abdichtung. Es verbleibt zum Arbeitsraum der Zahnradmpumpe lediglich ein kleiner Ringspalt. Somit wird an dieser Stelle eine gute Abdichtung erreicht. Wenn aufgrund des hohen Druckes im Arbeitsraum der Zahnradpumpe plastifizierter Kautschuk durch den kleinen, für das Spiel zwischen Welle und Gehäuse erforderlichen Ringspalt gepreßt wird, wirkt diesem Material der Förderdruck des Rückfördergewindes entgegen.

Die Fördercharakteristik bzw. die Höhe des erzielbaren Förderdruckes in einem Rückfördergewinde steigt mit zunehmender Länge des Rückförderkanals in Förderrichtung an. Durch die kontinuierliche Verringerung des wendelförmigen Gangvolumens in Förderrichtung wird eine weitere erhebliche Druckerhöhung in dem Kanal erreicht. Der höchste Druck entsteht in Förderrichtung kurz vor dem Kanalende. Der Rückförderkanal läuft in Förderrichtung kurz vor dem Wellenende aus, so daß das zurückgeförderte Material in den Ringspalt gepreßt wird und somit dem Druck des Materials, welches von dem Arbeitsraum der Zahnradpumpe in den Ringspalt gepreßt wird, entgegenwirkt.

Dem Material druck aus dem Arbeitsraum wird somit im Fall von Produktleckage ein hoher Gegendruck aus den Rückförderkanälen entgegengesetzt.

Ausführungsbeispiele der Erfindung werden in den Zeichnungen dargestellt.

Es zeigen:
- Fig. 1: einen Querschnitt durch die Einrichtung.
- Fig. 2: eine Draufsicht auf einen Längsschnitt der Einrichtung.
- Fig. 3: ein sich im Volumen entgegen der Förderrichtung verringernder Rückführungskanal in der Welle.
- Fig. 4: ein sich im Volumen entgegen der Förderrichtung des Rückfördergewindes verringernder Rückführungskanal in den Abdichtplatten.

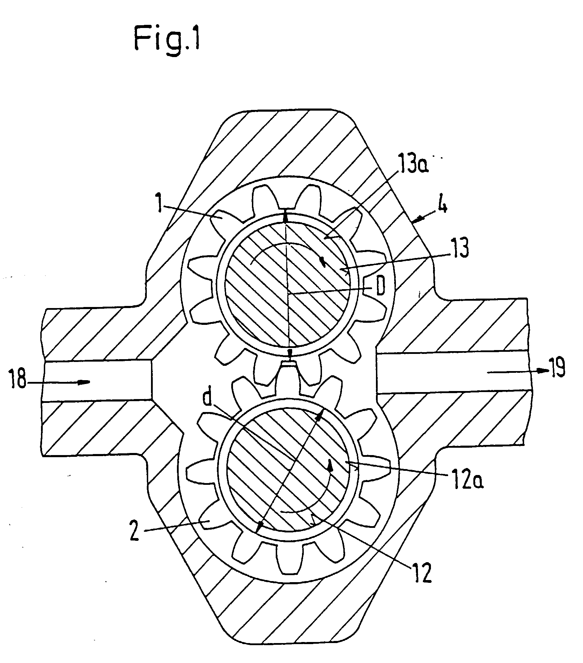

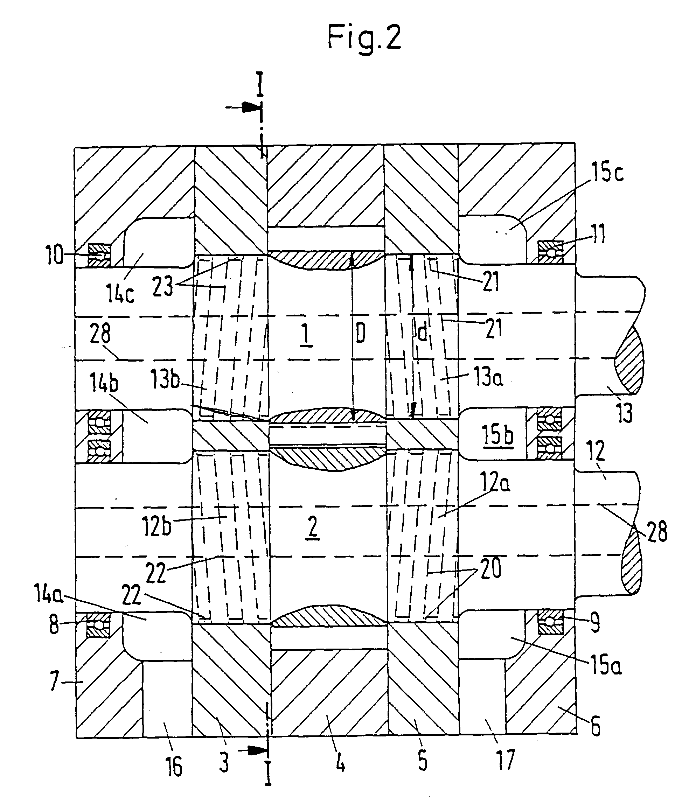

In Fig. 1 (Schnitt gemäß I-I in Fig. 2) werden zwei ein Dichtprofil miteinander bildende Zähne aufweisende Förderorgane 1 und 2 gezeigt, die in einem Gehäuse 4 angeordnet sind. Das Gehäuse 4 weist eine Materialeinlaßöffnung 18 sowie eine Auslaßöffnung 19 auf.

Bei der in Fig. 2 gezeigten Draufsicht, wird durch "D" der Durchmesser des Fußkreises des Förderorganes 1 und durch "d" der Durchmesser der Wellenenden gezeigt.

Die Förderorgane 1 und 2 sind in einem Gehäuse 4 angeordnet, welches auf beiden Seiten durch an dem Gehäuse 4 druckdicht befestigte Abdichtplatten 3 und 5 abgedichtet ist. Die Abdichtplatten 3 und 5 nehmen die Wellenendenteile 12a, 12b und 13a, 13b auf.

An den Abdichtplatten 3 und 5 sind jeweils beidseitig die Lagerplatten 6 und 7 durch nicht gezeigte Verschraubungen befestigt. Die Lagerplatten 6 und 7 nehmen die Lager 8, 9, 10 und 11 für die beiderseitigen Wellenteile 12 auf.

Die Wellenteile 12a, 12b und 13a, 13b weisen darin eingebrachte wendelförmig ausgebildete Rückförderkanälen 20, 21, 22, 23 auf, um in den Spalt zwischen den Wellenteilen 12a, 12b und 13a, 13b und den Abdichtplatten 3 und 5 eingedrungenes Material wieder in den Arbeitsraum zwischen den einzelnen Zähnen der Förderorgane 1 und 2 zurückzufördern.

Sollte indessen die Förderleistung der Rückfördergewinde nicht ausreichen und trotzdem Material durch diese Spalte dringen, wird es in den Aufnahmekammern 15a, 15b und 15c bzw. am gegenüberliegenden Wellenende in den Aufnahmekammern 14a, 14b und 14c gesammelt.

Das gesammelte Leckagematerial wird durch Abführkanäle 16 und 17 aus der Einrichtung herausgeführt, um zu vermeiden, daß Material in die Wellenlager 8, 9, 10 und 11 eindringt und dort Lagerschäden verursacht. Die Temperierung der Förderorgane 1 und 2 sowie der angrenzenden Wellenteile erfolgt durch Temperierbohrungen 28, an die ein nicht dargestelltes Umlauftemperiergerät anschließbar ist. Eine Temperierung der Förderorgane, d.h. in diesem Fall eine Kühlung, ist von großem Vorteil, weil dann die Förderleistung für hochviskose Kautschuke erheblich gesteigert werden kann, ohne daß z.B. durch eine übermäßige Temperaturerhöhung eine punktuelle Anvulkanisation auftritt.

Eine radiale äußerst schwierig darzustellende Abdichtung der Stirnflächen der Zähne selbst sowie der Bereiche der Zahnräder bis herunter zum eigentlichen Wellendurchmesser wird auf eine sehr einfache Weise vermieden. Durch die Ausbildung der Wellenteile 12a, 12b und 13a, 13b mit einem Durchmesser d der etwa dem Fußkreisdurchmesser D der Förderorgane 1 und 2 entspricht entfällt eine Abdichtung an diesen Stellen, weil die kritischen Stirnflächen selbst vermieden werden.

Die Herstellung der Zähne aufweisenden Förderorgane 1 und 2 aus einem Stück mit den angeformten Wellenteilen 12, 12a und 12b sowie 13, 13a und 13b ist sehr vorteilhaft.

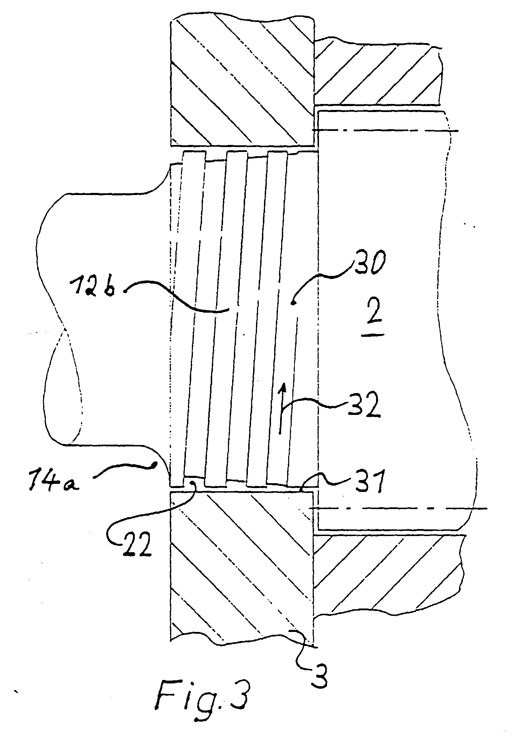

In Fig. 3 wird das Wellenteil 12b gezeigt mit darin eingebrachten Rückführungskanälen 22, die sich in Förderrichtung, dargestellt durch Pfeil 32, kontinuierlich in der Gangtiefe verringern und an der Stelle 30 auf Null auslaufen. Zwischen der Abdeckplatte 3 des Gehäuses 4 und dem Wellenteil 12b verbleibt ein Ringspalt 31, der etwa die Dicke einer Spielpassung aufweist und in der Zeichnung stark vergrößert dargestellt ist.

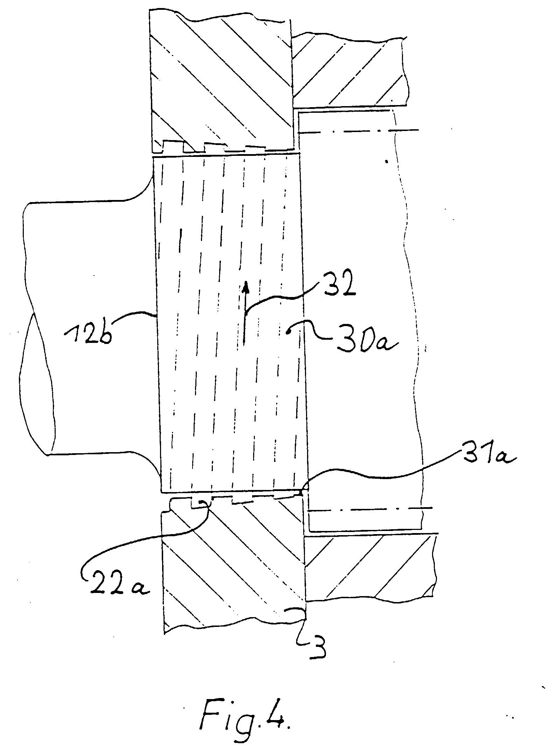

In Fig. 4 wird ein in die Abdeckplatte 3 des Gehäuses 4 eingebrachter Rückförderkanal 22a gezeigt. In diesem Fall ist das Wellenteil 12b als zylindrisches Teil ausgebildet. Die Tiefe des Rückförderkanals 22a verringert sich kontinuierlich auf Null an der Stelle 30a. Auch in diesem Fall ist ein Ringspalt 31a vorgesehen.

Das durch die Ringspalte 31 und 31a eingedrungene Material gelangt in die Rückführungskanäle 22 und 22a und wird, wenn ausreichend Material für das Einsetzen des Rückfördervorganges vorhanden ist, in Richtung der Pfeile 32 zurückgefördert. Durch die Verringerung der Kanaltiefe 22, 22a wird der Förderdruck kontinuierlich zunehmend erhöht.

### Bezugszeichenliste :

- D =: Fußkreisdurchmesser
- d =: Wellendurchmesser

- 1a =: Zahnrad
- 1b =: Zahnrad
- 2 =: Förderorgan
- 3 =: Gehäuse
- 4 =: Förderraumgehäuse
- 5 =: Gehäuse
- 6 =: Lagerplatte (Glockenteil)
- 7 =: Lagerplatte (Glockenteil)
- 8 =: Lager (Wälzlager)
- 9 =: Lager (Wälzlager)
- 10 =: Lager
- 11 =: Lager
- 12 =: Wellenteil
- 12a =: Wellenteil
- 12b =: Hellenteil
- 13 =: Wellenteil
- 13a =: Wellenteil
- 13b =: Wellenteil
- 14a =: Aufnahmekammer für Leckagematerial
- 14b =: Aufnahmekammer für Leckagematerial
- 14c =: Aufnahmekammer für Leckagematerial
- 15a =: Aufnahmekammer für Leckagematerial
- 15b =: Aufnahmekammer für Leckagematerial
- 15c =: Aufnahmekammer für Leckagematerial
- 16 =: Abführkanäle für Leckagematerial
- 17 =: Abführkanäle für Leckagematerial
- 18 =: Einlaßöffnung
- 19 =: Auslaßöffnung
- 20 =: Rückfördergewinde
- 20a =: Materialrückführungskanal
- 21 =: Rückfördergewinde
- 21a =: Materialrückführungskanal
- 22 =: Rückfördergewinde
- 22a =: Materialrückführungskanal
- 23 =: Rückfördergewinde
- 23a =: Materialrückführungskanal
- 24 =: Hülse
- 25 =: Hülse
- 26 =: Hülse
- 27 =: Hülse
- 28 =: Temperierbohrungen
- 30 =: Stelle
- 30a =: Stelle
- 31 =: Ringspalt
- 31a =: Ringspalt
- 32 =: Pfeil

## Patentansprüche

1. Einrichtung zum Erzeugen eines steuerbaren gleichmässigen Förderdruckes für die Verarbeitung von hochviskosem Kautschuk oder thermoplastischem Kunststoff, bestehend aus zwei rotierenden, ein zahnartiges Dichtprofil bildenden auf Wellenteilen (12, 13) in einem Gehäuse (4) gelagerten Förderorganen (1, 2), in welcher das Gehäuse (4) eine Einlaßöffnung (18) und eine Auslaßöffnung (19) für das zu fördernde Material aufweist und die Förderorgane (1, 2) allein oder gemeinsam antreibbar ausgebildet sind, wobei der Fußkreisdurchmesser (D) der das zahnartige Dichtprofil bildenden Förderorgane (1, 2) etwa dem Durchmesser (d) der axial beidseitig an den Förderorganen (1, 2) angrenzenden, die Führung der Förderorgane (1, 2) übernehmenden Wellenteile (12a, 13a) entspricht,
**dadurch gekennzeichnet**,
daß in den Wellenteilen (12a, 12b, 13a, 13b) oder in den Innenmantel des die Wellenteile (12a,12b, 13a, 13b) koaxial umgebenden Gehäuses (Abdichtplatten 3, 5) wendelförmige Materialrückführungskanäle (20, 21, 22, 23) eingebracht sind, die ein in ihrer Förderrichtung sich kontinuierlich bis auf Null verringerndes Kanalvolumen aufweisen.

2. Einrichtung nach Anspruch 1, wobei die Verringerung des Volumens der Materialrückführungskanäle (20, 20a, 21, 21a, 22, 22a, 23, 23a) durch eine entgegen der Förderrichtung sich kontinuierlich verringernde Kanaltiefe oder/und Kanalbreite erfolgt.

## Claims

1. Apparatus for producing a controllable, uniform conveying pressure for processing highly viscous rubber or thermoplastic plastics material, comprising two rotating conveying elements (1, 2), which form a tooth-like sealing profile and are mounted in a housing (4) on shaft portions (12, 13), in which apparatus the housing (4) has an inlet opening (18) and an outlet opening (19) for the material to be conveyed, and the conveying elements (1, 2) are configured to be drivable singly or collectively, the root circle diameter (D) of the conveying elements (1, 2), which form the tooth-like sealing profile, corresponding substantially to the diameter (d) of the shaft portions (12a, 13a), which axially abut against both sides of the conveying elements (1, 2) and effect the guidance of the conveying elements (1, 2), characterised in that helical material return channels (20, 21, 22, 23) are provided in the shaft portions (12a, 12b, 13a, 13b) or in the internal surface of the housing (sealing plates 3, 5), which coaxially surrounds the shaft portions (12a, 12b, 13a, 13b), and said channels have a channel volume which is continuously reduced to zero in their conveying direction.

2. Apparatus according to claim 1, wherein the volume of the material return channels (20, 20a, 21, 21a, 22, 22a, 23, 23a) is reduced by continuously reducing the channel depth and/or channel width in opposition to the conveying direction.

## Revendications

1. Dispositif de génération d'une pression régulière commandée de refoulement pour le traitement de caoutchouc ou de matière thermoplastique fortement visqueux, se composant de deux organes tournants de refoulement (1, 2) formant un profil d'étanchéité en forme de dents, montés sur des parties d'arbre (12, 13) dans un carter (4), dans lequel le carter (4) comprend un orifice d'admission (18) et un orifice de sortie (19) de la matière à refouler et les organes de refoulement (1, 2) sont entraînés individuellement ou ensemble, le diamètre de pied (D) des organes de refoulement (1, 2) qui forment un profil d'étanchéité en forme de dents correspondant approximativement au diamètre (d) des parties d'arbre (12a, 13a) avoisinant axialement des deux côtés les organes de refoulement (1, 2) et assumant l'entraînement des organes de refoulement (1, 2).
caractérisé
en ce que des canaux hélicoïdaux de transport en retour de la matière (20, 21, 22, 23) sont réalisés dans les parties d'arbre (12a, 12b, 13a, 13b) ou dans l'enveloppe intérieure du carter (plaques d'étanchéité 3, 5) entourant coaxialement les parties d'arbre (12a, 12b, 13a, 13b) et présentent un volume de canal qui diminue en continu jusqu'à une valeur nulle dans leur sens de transport.

2. Dispositif selon la revendication 1, dans lequel la diminution du volume des canaux de transport en retour de matière (20, 20a, 21, 21a, 22, 22a, 23, 23a) est produite par une diminution continue de la profondeur du canal et/ou de la largeur du canal dans le sens inverse de celui du transport.
